# EUROPEAN PATENT APPLICATION

(11) **EP 4 843 830 A1**
(43) Date of publication of application: **25.11.2026**
(21) Application number: 25755085.5
(22) Date of filing: 23.01.2025
(51) Int. Cl.: B60R 1/23, G06T 5/50, H04N 13/156, H04N 13/25

(54) **BLIND AREA DISPLAY DEVICE FOR CONSTRUCTION MACHINERY, AND BLIND AREA DISPLAY METHOD FOR CONSTRUCTION MACHINERY**

(30) Priority: 16.02.2024 KR 20240022817
(71) Applicant: HD Construction Equipment Co., Ltd., Seongnam-si, Gyeonggi-do 13553 (KR)
(72) Inventor: LEE, Sanghoon, Yongin-si Gyeonggi-do 16892 (KR); JUNG, Joonyong, Seoul 07930 (KR)
(74) Representative: Isarpatent
(86) International application number: PCT/KR2025/001277
(87) International publication number: WO 2025/173963

(57) **Abstract**

According to an embodiment of the present disclosure, a construction machine blind spot display apparatus includes at least one processor, wherein the at least one processor is configured to: acquire a first image from a first camera installed at a first position of a construction machine; acquire a second image from a second camera installed at a second position of the construction machine; generate a composite image by synthesizing the first image and the second image using a pre-implemented 3D model; and output the generated composite image using a preset device.

## Description

### [Technical Field]

Various embodiments of the present disclosure relate to a construction machine blind spot display apparatus and a construction machine blind spot display method.

### [Background]

Generally, in an earthworking environment, construction machines such as dozers, loaders, excavators, graders, dump trucks, and articulated dump trucks are mainly utilized. In particular, a dump truck in which a front frame and a rear frame are hinged to each other and steering is performed in left and right directions through a steering cylinder is referred to as an articulated dump truck.

While a general dump truck changes direction by turning its front wheels, an articulated dump truck changes direction by turning its front head. Therefore, the articulated dump truck can reduce a turning radius to easily move in a narrow site and secure an efficient travel route.

Construction machines such as articulated dump trucks are manufactured increasingly larger for reasons such as operational efficiency. Such a large-sized construction machine causes a problem in that a blind spot, which cannot be seen by an operator of the construction machine sitting in an operator's seat of the construction machine, is formed immediately in front of the construction machine.

### [DISCLOSURE]

### [Technical Problem]

Embodiments of the present disclosure provide a construction machine blind spot display apparatus and a construction machine blind spot display method that are configured to display an image of a blind spot of a construction machine by using a composite image obtained by synthesizing a first image and a second image.

In addition, embodiments of the present disclosure provide a construction machine blind spot display apparatus and a construction machine blind spot display method that are configured to recognize an object included in an image and output a composite image implementing an object warning for the recognized object.

### [Technical Solution]

According to an embodiment of the present disclosure, a construction machine blind spot display apparatus includes a first camera installed at a first position of a construction machine to capture an area viewable by an operator of the construction machine, a second camera installed at a second position of the construction machine to capture a blind spot that is not viewable by the operator of the construction machine, and at least one processor. The at least one processor may be configured to: acquire a first image from the first camera; acquire a second image from the second camera; generate a composite image by synthesizing the first image and the second image using a pre-implemented 3D model; and output the generated composite image using a preset device.

In addition, the at least one processor may be configured to: detect an object included in an image from at least one of the first image and the second image; implement an object warning for the detected object; and combine the implemented object warning with the composite image.

In addition, the at least one processor may be configured to determine the first image as a background image, and generate the composite image by projecting the second image onto the background image.

In addition, the at least one processor may be configured to: acquire images capturing two panels placed at predefined positions for each of the first camera and the second camera; when the two panels are recognized at the predefined positions in the image for each camera, calculate distances to the two panels using triangulation; and update parameters of the pre-implemented 3D model using the calculated distances.

In addition, the first position and the second position may be located on a same line in a front-to-rear direction of the construction machine.

In addition, the first position may be an upper portion of an operator's seat, and the second position may be a front bumper of the construction machine.

According to another embodiment of the present disclosure, a construction machine blind spot display method may include: acquiring a first image from a first camera installed at a first position of a construction machine to capture an area viewable by an operator of the construction machine; acquiring a second image from a second camera installed at a second position of the construction machine to capture a blind spot that is not viewable by the operator of the construction machine; generating a composite image by synthesizing the first image and the second image using a pre-implemented 3D model; and outputting the generated composite image using a preset device.

In addition, the construction machine blind spot display method may further include: detecting an object included in an image from at least one of the first image and the second image; implementing an object warning for the detected object; and combining the implemented object warning with the composite image.

In addition, the generating of the composite image may include: determining the first image as a background image; and projecting the second image onto the background image.

In addition, the construction machine blind spot display method may further include updating parameters of the pre-implemented 3D model, wherein the updating of the parameters of the pre-implemented 3D model may include: acquiring images capturing two panels placed at predefined positions for each of the first camera and the second camera; when the two panels are recognized at the predefined positions in the image for each camera, calculating distances to the two panels using triangulation; and updating the parameters of the pre-implemented 3D model using the calculated distances.

### [Advantageous Effects]

According to an embodiment of the present disclosure, an image of a blind spot of a construction machine may be displayed by using a composite image obtained by synthesizing a first image and a second image.

In addition, an object included in an image may be recognized, and a composite image implementing an object warning for the recognized object may be output.

### [Brief Description of the Drawings]

FIG. 1 is a view illustrating an operation of a construction machine blind spot display apparatus according to an embodiment.
FIG. 2 is a view illustrating a configuration of a construction machine blind spot display apparatus according to an embodiment.
FIGS. 3A and 3B are views illustrating positions where cameras of a construction machine blind spot display apparatus are mounted on a construction machine according to an embodiment.
FIG. 4 is a flowchart illustrating a method of updating parameters of a 3D model for image synthesis according to an embodiment.
FIG. 5 is a flowchart illustrating a construction machine blind spot display method according to an embodiment.
FIG. 6 is a flowchart illustrating a construction machine blind spot display method according to another embodiment.

### [Description of Embodiments]

Specific structural or functional descriptions for embodiments according to the concept of the present disclosure disclosed in the present specification are merely illustrated for the purpose of describing the embodiments according to the concept of the present disclosure. The embodiments according to the concept of the present disclosure may be implemented in various forms and are not limited to the embodiments described in the present specification.

Since the embodiments according to the concept of the present disclosure may be modified in various ways and have various forms, the embodiments will be illustrated in the drawings and described in detail in the present specification. However, this is not intended to limit the embodiments according to the concept of the present disclosure to specific disclosure forms, and includes all modifications, equivalents, or substitutes included in the spirit and technical scope of the present disclosure.

Terms such as first or second may be used to describe various components, but the components should not be limited by the terms. The terms are used only for the purpose of distinguishing one component from another component. For example, without departing from the scope of rights according to the concept of the present disclosure, a first component may be named a second component, and similarly, a second component may also be named a first component.

When it is mentioned that a certain component is "connected" or "coupled" to another component, it should be understood that it may be directly connected or coupled to the other component, but another component may exist therebetween. On the other hand, when it is mentioned that a certain component is "directly connected" or "directly coupled" to another component, it should be understood that no other component exists therebetween. Other expressions describing the relationship between components, such as "between" and "directly between" or "adjacent to" and "directly adjacent to", should be interpreted in the same manner.

The terminology used in the present specification is merely used to describe specific embodiments and is not intended to limit the present disclosure. Singular expressions include plural expressions unless the context clearly indicates otherwise.

In the present specification, terms such as "comprise" or "have" are intended to designate that a described feature, number, step, operation, component, part, or a combination thereof exists, and it should be understood that they do not preclude the existence or addition possibility of one or more other features, numbers, steps, operations, components, parts, or combinations thereof.

Unless otherwise defined, all terms including technical or scientific terms used herein have the same meaning as commonly understood by one of ordinary skill in the art to which the present disclosure belongs.

Terms such as those defined in a commonly used dictionary should be interpreted as having meanings consistent with the meanings in the context of the related art, and are not interpreted in an ideal or excessively formal sense unless explicitly defined in the present specification.

In the following description, the same identification symbols refer to the same components, and unnecessary redundant descriptions and descriptions of well-known technologies will be omitted.

In the embodiments of the present disclosure, 'communication', 'communication network', and 'network' may be used to have the same meaning. The three terms refer to a wired and wireless local area and wide area data transmission/reception network capable of transmitting and receiving files among a user terminal, terminals of other users, and a download server.

Hereinafter, the present disclosure will be described in detail by describing preferred embodiments of the present disclosure with reference to the accompanying drawings.

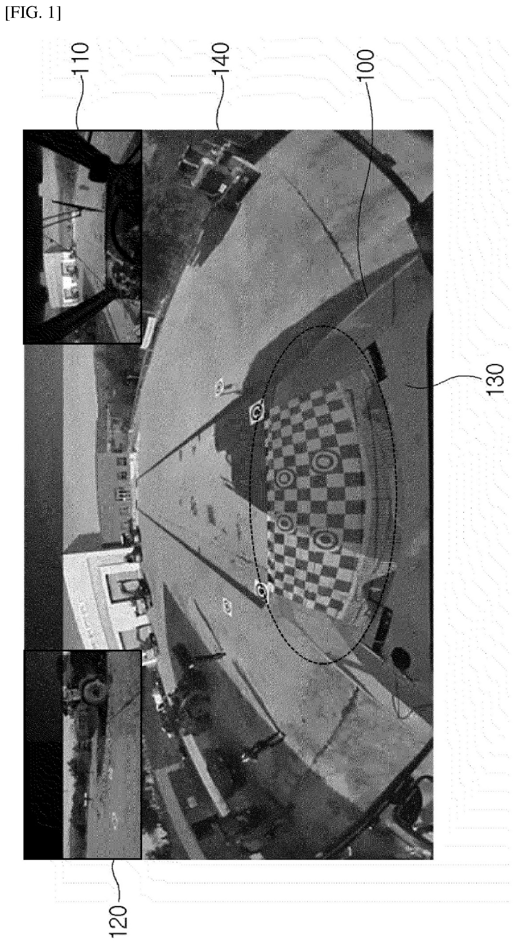

FIG. 1 is a view illustrating an operation of a construction machine blind spot display apparatus according to an embodiment.

Referring to FIG. 1, according to various embodiments, since an operator's seat of a construction machine (e.g., an articulated dump truck, etc.) 100 is located at a very high position from the ground, a sight 110 of an operator for a long distance from the construction machine 100 is very good.

On the other hand, when a protruding portion such as a hood 130 exists in the construction machine 100, a blind spot is formed 120 immediately in front of the construction machine 100, which cannot be seen by the operator of the construction machine sitting in the operator's seat.

According to various embodiments, cameras included in the construction machine blind spot display apparatus may be installed on an upper portion of the operator's seat of the construction machine 100 and a front bumper of the construction machine 100, respectively.

The construction machine blind spot display apparatus may generate a composite image by synthesizing respective images acquired by the cameras installed on the upper portion of the operator's seat of the construction machine 100 and the front bumper of the construction machine 100, respectively.

The construction machine blind spot display apparatus may display the generated composite image on a display 140 of the construction machine 100. When the composite image generated by synthesizing the respective images acquired by the cameras installed on the upper portion of the operator's seat of the construction machine 100 and the front bumper of the construction machine 100 is displayed on the display 140 of the construction machine (e.g., an articulated dump truck, etc.) 100, it helps the operator of the construction machine identify a pedestrian even in a situation where it is difficult to identify the presence of the pedestrian because the pedestrian is hidden by the hood 130 of the construction machine (e.g., an articulated dump truck, etc.) 100 when the pedestrian enters the blind spot of the construction machine. In addition, objects around the construction machine can also be easily identified, thereby helping to drive the equipment safely.

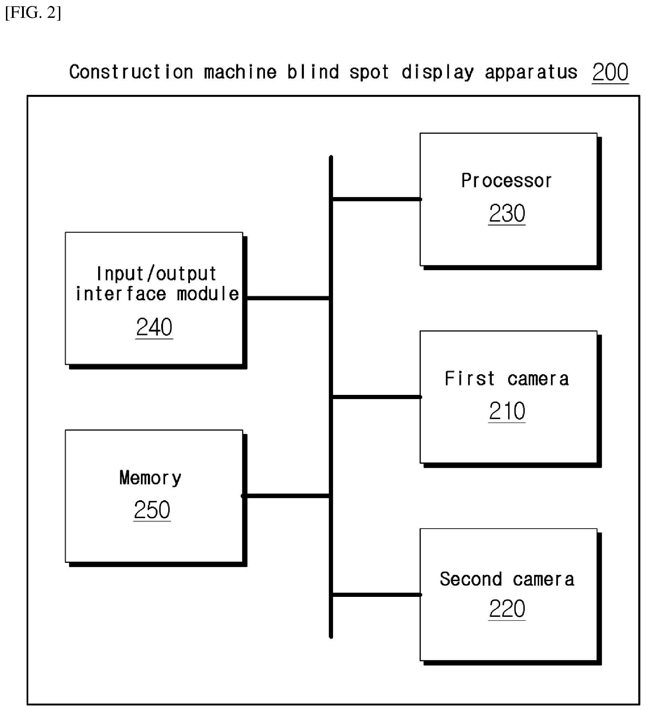

FIG. 2 is a view illustrating a configuration of a construction machine blind spot display apparatus according to an embodiment.

According to various embodiments, a construction machine blind spot display apparatus 200 may be coupled to a construction machine as a separate independent device. Alternatively, the construction machine blind spot display apparatus 200 may be communicatively connected to the construction machine as a separate independent device. Alternatively, the construction machine blind spot display apparatus 200 may be included in the construction machine.

Referring to FIG. 2, the construction machine blind spot display apparatus 200 according to various embodiments includes a first camera 210, a second camera 220, a processor 230, an input/output interface module 240, and a memory 250.

The first camera 210, the second camera 220, the processor 230, the input/output interface module 240, and the memory 250 included in the construction machine blind spot display apparatus 200 are interconnected and are configured to transmit data to each other.

According to various embodiments, the processor 230 may execute programs or instructions stored in the memory 250. Here, an operation program (e.g., an OS) for operating the construction machine blind spot display apparatus 200 may be stored in the memory 250.

The processor 230 may execute a program for managing information on the construction machine blind spot display apparatus 200.

The processor 230 may execute a program for managing an operation of the construction machine blind spot display apparatus 200.

The processor 230 may execute a program for managing an operation of the input/output interface module 240.

According to various embodiments, the first camera 210 may be installed on an upper portion of an operator's seat of the construction machine, which is a first position. According to an embodiment, the first camera 210 may be installed on the upper portion of the operator's seat vertically above a head of an operator sitting in the operator's seat of the construction machine. According to another embodiment, the first camera 210 may be installed on the upper portion of the operator's seat of the construction machine to be in the same direction as a line of sight of the operator sitting in the operator's seat of the construction machine.

The first camera 210 may generate a first image corresponding to a field of view of the operator sitting in the operator's seat of the construction machine.

According to various embodiments, the second camera 220 may be installed on a front bumper of the construction machine, which is a second position. The second camera 220 may be installed on the front bumper of the construction machine, which is the second position, to have a preset angle (e.g., 45 degrees, etc.). Here, the preset angle is an angle that may be changed in consideration of a shape, a size, and the like of the construction machine.

According to various embodiments, the second camera 220 may be installed on the front bumper of the construction machine existing on the same line as the first camera 210. In this way, when the first camera 210 and the second camera 220 are located on the same line, camera calibration is easy, and since the cameras are arranged based on the same axis, physical reference coordinates exist during camera parameter modeling, which may be advantageous.

According to various embodiments, the second camera 220 may generate a second image corresponding to a front image of the construction machine.

According to various embodiments, the processor 230 may acquire the first image generated by the first camera 210 and the second image generated by the second camera 220.

The processor 230 may determine one of the first image and the second image as a background image. According to an embodiment, the processor 230 may determine the first image generated by the first camera 210 installed on the upper portion of the operator's seat of the construction machine, which is the first position, as the background image, and the processor 230 may determine the second image generated by the second camera 220 installed on the front bumper of the construction machine, which is the second position, as an image to be projected onto the background image.

The processor 230 may generate a composite image by synthesizing the first image and the second image using a pre-implemented 3D model. The processor 230 may update parameters of the pre-implemented 3D model. The processor 230 may acquire an image capturing a calibration panel installed in front of the construction machine in order to calibrate and update the parameters of the pre-implemented 3D model.

According to an embodiment, the processor 230 may calculate the parameters of the 3D model based on the acquired image capturing the calibration panel installed in front of the construction machine. Then, the processor 230 may compare the calculated parameters of the 3D model with the parameters of the pre-implemented 3D model, and update the parameters of the pre-implemented 3D model according to a comparison result.

According to various embodiments, the processor 230 may perform curved surface projection of the first image, which is generated by the first camera 210 and determined as the background image, onto the pre-implemented 3D model.

The processor 230 may generate the composite image by performing curved surface projection of the second image generated by the second camera 220 onto the pre-implemented 3D model on which the first image is curved-surface projected, such that the second image is configured to be overlaid on the first image.

The processor 230 may synchronize the first image and the second image using a preset method. Here, the preset method may be frame sync, but the preset method is not limited thereto.

According to various embodiments, the processor 230 may output the generated composite image using a preset device. Here, the preset device may be a display device provided in the operator's seat of the construction machine, a head-up display (HUD) device, a head-mounted display (HMD) device, an image output device configured to output the composite image to the hood of the construction machine, or the like, but the preset device is not limited thereto.

According to various embodiments, the processor 230 may output the generated composite image to an external device. Here, the external device may be a control device configured to remotely monitor and control the construction machine, but the external device is not limited thereto.

According to various embodiments, the processor 230 may recognize an object included in the image from at least one of the first image and the second image. According to an embodiment, the processor 230 may detect the object from the second image generated by the second camera 220 installed on the front bumper of the construction machine, which is the second position. When the object is detected, the processor 230 may display an object warning so that the operator of the construction machine can recognize the detected object. The processor 230 may display the object warning as an image displaying the detected object (e.g., a red square image surrounding the object, etc.) so that the operator of the construction machine can recognize the detected object, but the warning for object recognition that can be implemented by the processor 230 is not limited thereto.

According to various embodiments, the processor 230 may combine the displayed object warning with the composite image.

According to various embodiments, the processor 230 may output the composite image combined with the object warning using a preset device. Here, the preset device may be a display device provided in the operator's seat of the construction machine, a head-up display (HUD) device, a head-mounted display (HMD) device, an image output device configured to output the composite image to the hood of the construction machine, or the like, but the preset device is not limited thereto.

The processor 230 may output the composite image combined with the object warning to an external device. Here, the external device may be a control device configured to remotely monitor and control the construction machine, but the external device is not limited thereto.

According to various embodiments, the input/output interface module 240 may be connected to an external device (e.g., a control device configured to remotely monitor and control the construction machine, an operation information transmission server, etc.) through a network. The input/output interface module 240 may acquire data (e.g., operation information, etc.) from the external device. The input/output interface module 240 may be communicatively connected to the first camera and the second camera. The input/output interface module 240 may acquire data (e.g., the first image, the second image, etc.) from the first camera and the second camera. The input/output interface module 240 may acquire a control signal transmitted by the external device. The input/output interface module 240 may transmit data to the external device.

According to various embodiments, the input/output interface module 240 may acquire a user's input. The input/output interface module 240 may be provided integrally with the construction machine blind spot display apparatus. The input/output interface module 240 may be provided separately from the construction machine blind spot display apparatus. The input/output interface module 240 may be a separate device to be communicatively connected to the construction machine blind spot display apparatus.

According to various embodiments, the input/output interface module 240 may include a port (e.g., a USB port) for connecting with an external device. The input/output interface module 240 may include a monitor, a touch screen, a mouse, an electronic pen, a microphone, a keyboard, a speaker, an earphone, headphones, or a touch pad.

According to various embodiments, the memory 250 may store data acquired through the input/output interface module 240. The memory 250 may store data transmitted through the input/output interface module 240. The memory 250 may store data output through the input/output interface module 240. The memory 250 may store the background image determined by the processor 230. The memory 250 may store a projection image determined by the processor 230. The memory 250 may store the user's input. The memory 250 may store the parameters of the pre-implemented 3D model updated by the processor 230. The memory 250 may store the composite image synthesized by the processor 230. The memory 250 may store the object warning implemented by the processor 230. The memory 250 may store the composite image combined with the object warning. The memory 250 may store an application program.

The term 'apparatus or module' used herein refers to a logical configuration unit, and it is obvious to those skilled in the art to which the present disclosure belongs that it is not necessarily a physically separated component.

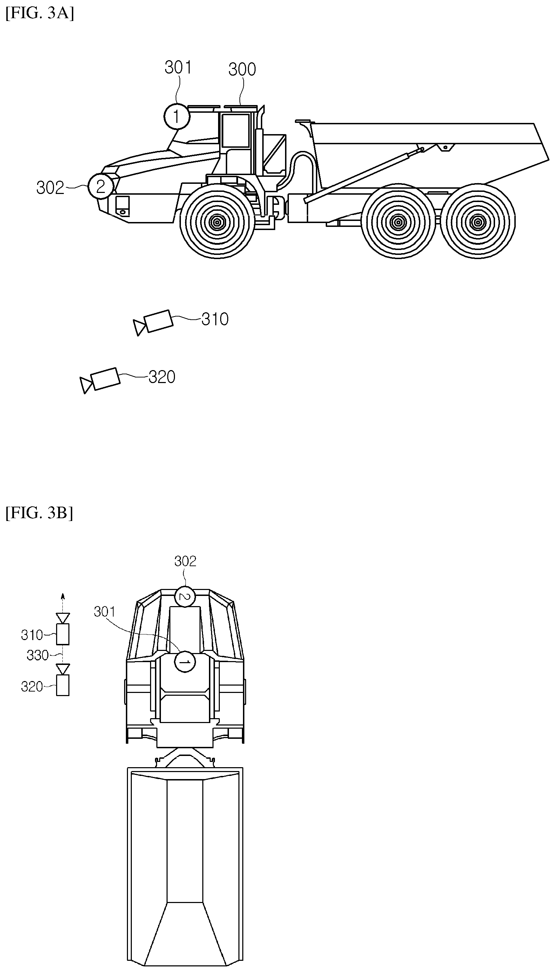

FIGS. 3A and 3B are views illustrating positions where cameras of a construction machine blind spot display apparatus are mounted on a construction machine according to an embodiment.

FIG. 3A illustrates the mounted positions of the cameras as viewed from a side of the construction machine, and FIG. 3B illustrates the mounted positions of the cameras as viewed from an upper portion of the construction machine.

Referring to FIGS. 3A and 3B, the construction machine blind spot display apparatus may include a first camera 310 and a second camera 320.

The first camera 310 included in the construction machine blind spot display apparatus may be installed at a center 301 of an upper portion of an operator's seat of the construction machine 300, which is a first position. According to an embodiment, the first camera 310 included in the construction machine blind spot display apparatus may be installed on the upper portion 301 of the operator's seat vertically above a head of an operator sitting in the operator's seat of the construction machine 300. In addition, the first camera 310 included in the construction machine blind spot display apparatus may be installed on the upper portion 301 of the operator's seat of the construction machine 300 to be in the same direction as a line of sight of the operator sitting in the operator's seat of the construction machine 300.

The second camera 320 included in the construction machine blind spot display apparatus may be installed at a center 302 of a front bumper of the construction machine 300, which is a second position. According to an embodiment, the second camera 320 included in the construction machine blind spot display apparatus may be installed at the second position to have a downward angle of 45 degrees.

The first camera 310 and the second camera 320 included in the construction machine blind spot display apparatus may be installed on the same straight line 330.

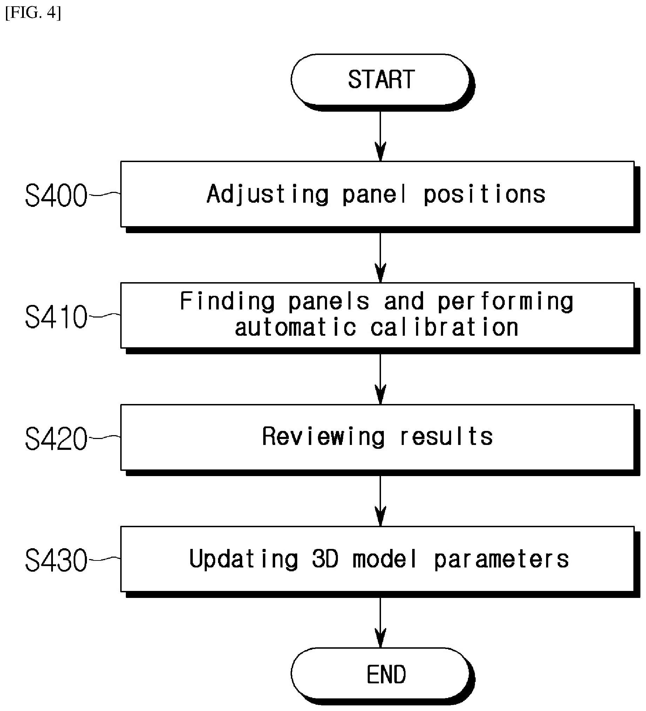

FIG. 4 is a flowchart illustrating a method of updating parameters of a 3D model for image synthesis according to an embodiment.

The method of updating the parameters of the 3D model of FIG. 4 may be executed according to a user's request, periodically, or when a large error occurs.

Referring to FIG. 4, in operation S400, an inspector may position a calibration panel around a construction machine to calibrate a pre-implemented 3D model. According to an embodiment, based on a first camera 310 and a second camera 320, two calibration panels may be positioned at predefined positions for each camera, respectively.

In operation S410, the construction machine blind spot display apparatus may capture the two calibration panels corresponding to each camera using the first camera 340 and the second camera 350, find the two calibration panels corresponding to each camera from captured images, and perform automatic calibration. When the construction machine blind spot display apparatus normally finds the panel at a predefined position in the image of each camera, the construction machine blind spot display apparatus may calculate an actual distance using triangulation with respect to each panel based on an installation position of each camera, and display a result on a display.

In operation S420, a manager or a user may review the displayed result, and based on a result of the review, select re-execution, terminate the operation without updating the parameters, or terminate the operation after updating the parameters. According to an embodiment, when the result displayed on the display is not valid, the manager or the user may instruct to re-execute the operation for updating the parameters. Alternatively, when there is little difference between the result displayed on the display and current parameters, the operation may be terminated without an update. Alternatively, when the result displayed on the display is valid and there is a difference compared with the current parameters, the manager or the user may instruct to update model parameters.

According to another embodiment, operation S420 may be executed by the construction machine blind spot display apparatus.

In operation S430, when the result of operation S420 instructs to update the model parameters, the construction machine blind spot display apparatus may update the parameters of the 3D model by storing a calculated distance result.

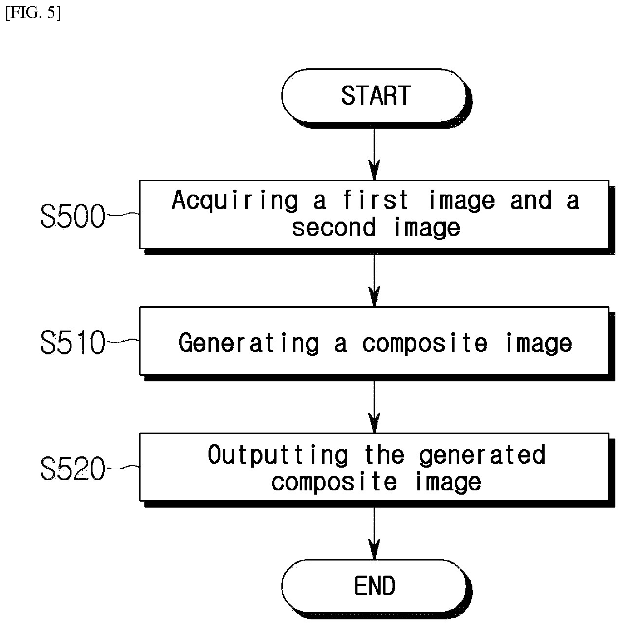

FIG. 5 is a flowchart illustrating a construction machine blind spot display method according to an embodiment.

Referring to FIG. 5, the construction machine blind spot display method according to an embodiment includes the steps of: acquiring, by a construction machine blind spot display apparatus, a first image from a first camera installed at a first position of a construction machine, and acquiring a second image from a second camera installed at a second position of the construction machine (S500); generating, by the construction machine blind spot display apparatus, a composite image by synthesizing the first image and the second image using a pre-implemented 3D model (S510); and outputting, by the construction machine blind spot display apparatus, the generated composite image using a preset device (S520).

In step S500, the construction machine blind spot display apparatus may acquire the first image generated by the first camera and acquire the second image generated by the second camera. The second camera may be installed to capture a blind spot.

In step S510, the construction machine blind spot display apparatus may determine one of the first image and the second image as a background image. According to an embodiment, the construction machine blind spot display apparatus may determine the first image generated by the first camera installed on an upper portion of an operator's seat of the construction machine, which is the first position, as the background image. Then, the construction machine blind spot display apparatus may determine the second image generated by the second camera, which is installed on a front bumper of the construction machine to capture the blind spot and is at the second position, as an image to be projected onto the background image.

In step S510, the construction machine blind spot display apparatus may generate the composite image by synthesizing the first image and the second image using the pre-implemented 3D model.

According to an embodiment, the construction machine blind spot display apparatus may perform curved surface projection of the first image, which is generated by the first camera and determined as the background image, onto the pre-implemented 3D model. Then, the construction machine blind spot display apparatus may generate the composite image by performing curved surface projection of the second image generated by the second camera onto the pre-implemented 3D model on which the first image is curved-surface projected, such that the second image is configured to be overlaid on the first image.

In step S520, the construction machine blind spot display apparatus may output the generated composite image using a preset device. Here, the preset device may be a display device provided in the operator's seat of the construction machine, a head-up display (HUD) device, a head-mounted display (HMD) device, an image output device configured to output the composite image to a hood of the construction machine, or the like, but the preset device is not limited thereto.

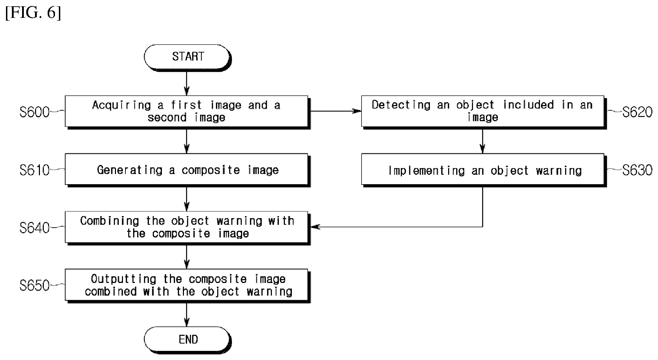

FIG. 6 is a flowchart illustrating a construction machine blind spot display method according to another embodiment.

Referring to FIG. 6, the construction machine blind spot display method according to an embodiment includes the steps of: acquiring, by a construction machine blind spot display apparatus, a first image from a first camera installed at a first position of a construction machine, and acquiring a second image from a second camera installed at a second position of the construction machine (S600); generating, by the construction machine blind spot display apparatus, a composite image by synthesizing the first image and the second image using a pre-implemented 3D model (S610); detecting, by the construction machine blind spot display apparatus, an object included in an image from at least one of the first image and the second image (S620); implementing, by the construction machine blind spot display apparatus, an object warning for the detected object (S630); combining, by the construction machine blind spot display apparatus, the object warning with the composite image (S640); and outputting, by the construction machine blind spot display apparatus, the generated composite image using a preset device (S650).

In step S600, the construction machine blind spot display apparatus may acquire the first image generated by the first camera and acquire the second image generated by the second camera.

In step S610, the construction machine blind spot display apparatus may determine one of the first image and the second image as a background image. According to an embodiment, the construction machine blind spot display apparatus may determine the first image generated by the first camera installed on an upper portion of an operator's seat of the construction machine, which is the first position, as the background image.

The construction machine blind spot display apparatus may determine the second image generated by the second camera installed on a front bumper of the construction machine, which is the second position, as an image to be projected onto the background image.

In step S610, the construction machine blind spot display apparatus may generate the composite image by synthesizing the first image and the second image using the pre-implemented 3D model.

According to an embodiment, the construction machine blind spot display apparatus may perform curved surface projection of the first image, which is generated by the first camera and determined as the background image, onto the pre-implemented 3D model. In addition, the construction machine blind spot display apparatus may generate the composite image by performing curved surface projection of the second image generated by the second camera onto the pre-implemented 3D model on which the first image is curved-surface projected, such that the second image is configured to be overlaid on the first image.

In step S620, the construction machine blind spot display apparatus may recognize the object included in the image from at least one of the first image and the second image.

According to an embodiment, the construction machine blind spot display apparatus may detect the object only from the second image generated by the second camera, which is installed on the front bumper of the construction machine to capture the blind spot and is at the second position.

In step S630, the construction machine blind spot display apparatus may implement the object warning for the detected object so that an operator of the construction machine can recognize the detected object.

According to an embodiment, the construction machine blind spot display apparatus may implement the object warning as an image displaying the detected object (e.g., a red square image surrounding the object, etc.) so that the operator of the construction machine can recognize the detected object.

In step S640, the construction machine blind spot display apparatus may combine the implemented object warning with the composite image.

In step S650, the construction machine blind spot display apparatus may output the composite image combined with the object warning using a preset device. Here, the preset device may be a display device provided in the operator's seat of the construction machine, a head-up display (HUD) device, a head-mounted display (HMD) device, an image output device configured to output the composite image to a hood of the construction machine, or the like, but the preset device is not limited thereto.

Even though all the components constituting the embodiments of the present disclosure have been described above as being combined into one or operating in combination, the present disclosure is not necessarily limited to these embodiments. That is, within the scope of the purpose of the present disclosure, all the components may operate by being selectively combined into at least one.

In addition, although all of the components may be implemented as one independent hardware, some or all of the components may be selectively combined to be implemented as a computer program having a program module that performs some or all of the functions combined in one or a plurality of hardware. Codes and code segments constituting the computer program may be easily inferred by those skilled in the art to which the present disclosure belongs.

Such a computer program is stored in a computer-readable storage medium and is read and executed by a computer, thereby implementing the embodiments of the present disclosure. Storage media for computer programs may include magnetic recording media, optical recording media, and the like.

In addition, since terms such as "comprise", "configure", or "have" described above mean that the corresponding component may be inherent unless otherwise specified, they should be interpreted as being capable of further including other components rather than excluding other components.

Unless otherwise defined, all terms including technical or scientific terms have the same meaning as commonly understood by one of ordinary skill in the art to which the present disclosure belongs. Terms commonly used, such as those defined in a dictionary, should be interpreted as having meanings consistent with the contextual meanings of the related art, and are not interpreted in an ideal or excessively formal sense unless explicitly defined in the present disclosure.

The above description is merely illustrative of the technical spirit of the present disclosure, and various modifications and variations may be made by those skilled in the art to which the present disclosure belongs without departing from the essential characteristics of the present disclosure.

Therefore, the embodiments disclosed in the present disclosure are not intended to limit the technical spirit of the present disclosure but to describe it, and the scope of the technical spirit of the present disclosure is not limited by these embodiments. The scope of protection of the present disclosure should be interpreted by the following claims, and all technical spirits within the scope equivalent thereto should be interpreted as being included in the scope of rights of the present disclosure.

## Claims

1. A blind spot display apparatus for a construction machine, comprising:
a first camera installed at a first position of a construction machine to capture an area viewable by an operator of the construction machine;
a second camera installed at a second position of the construction machine to capture a blind spot that is not viewable by the operator of the construction machine; and
at least one processor,
wherein the at least one processor is configured to:
acquire a first image from the first camera;
acquire a second image from the second camera;
generate a composite image by synthesizing the first image and the second image using a pre-implemented 3D model; and
output the generated composite image using a preset device.

2. The blind spot display apparatus of claim 1, wherein the at least one processor is configured to:
detect an object included in at least one of the first image and the second image;
implement an object warning for the detected object; and
combine the implemented object warning with the composite image.

3. The blind spot display apparatus of claim 1, wherein the at least one processor is configured to determine the first image as a background image, and generate the composite image by projecting the second image onto the background image.

4. The blind spot display apparatus of claim 1, wherein the at least one processor is configured to:
acquire images capturing two panels placed at predefined positions for each of the first camera and the second camera;
when the two panels are recognized at the predefined positions in the image for each camera, calculate distances to the two panels using triangulation; and
update parameters of the pre-implemented 3D model using the calculated distances.

5. The blind spot display apparatus of claim 1, wherein the first position and the second position are located on a same line in a front-to-rear direction of the construction machine.

6. The blind spot display apparatus of claim 5, wherein the first position is an upper portion of an operator's seat, and the second position is a front bumper of the construction machine.

7. A blind spot display method of a construction machine comprising:
acquiring a first image from a first camera installed at a first position of a construction machine to capture an area viewable by an operator of the construction machine;
acquiring a second image from a second camera installed at a second position of the construction machine to capture a blind spot that is not viewable by the operator of the construction machine;
generating a composite image by synthesizing the first image and the second image using a pre-implemented 3D model; and
outputting the generated composite image using a preset device.

8. The construction machine blind spot display method of claim 7, further comprising:
detecting an object included in an image from at least one of the first image and the second image;
implementing an object warning for the detected object; and
combining the implemented object warning with the composite image.

9. The construction machine blind spot display method of claim 7, wherein the generating of the composite image comprises:
determining the first image as a background image; and
projecting the second image onto the background image.

10. The construction machine blind spot display method of claim 7, further comprising updating parameters of the pre-implemented 3D model.

11. The construction machine blind spot display method of claim 7, wherein the updating of the parameters of the pre-implemented 3D model comprises:
acquiring images capturing two panels placed at predefined positions for each of the first camera and the second camera;
when the two panels are recognized at the predefined positions in the image for each camera, calculating distances to the two panels using triangulation; and
updating the parameters of the pre-implemented 3D model using the calculated distances.

12. The construction machine blind spot display method of claim 7, wherein the first position and the second position are located on a same line in a front-to-rear direction of the construction machine.

13. The construction machine blind spot display method of claim 12, wherein the first position is an upper portion of an operator's seat, and the second position is a front bumper of the construction machine.
